# EUROPEAN PATENT SPECIFICATION

(11) **EP 4 585 793 B1**
(45) Date of publication and mention of the grant of the patent: **05.08.2026**
(21) Application number: 24151681.4
(22) Date of filing: 12.01.2024
(51) Int. Cl.: F02B 63/04, B60R 16/03

(54) **ELECTRICAL SYSTEM FOR A COMBUSTION ENGINE VEHICLE AND ASSOCIATED VEHICLE**
ELEKTRISCHES SYSTEM FÜR EIN KRAFTFAHRZEUG MIT VERBRENNUNGSMOTOR UND ZUGEHÖRIGES FAHRZEUG
SYSTÈME ÉLECTRIQUE POUR VÉHICULE À MOTEUR À COMBUSTION INTERNE ET VÉHICULE ASSOCIÉ

(43) Date of publication of application: 16.07.2025
(73) Proprietor: Volvo Truck Corporation, 405 08 Göteborg (SE)
(72) Inventor: BOETE, Yann, 69004 LYON (FR); LUNDSTEDT, Björn, 56 Lerum (SE); BRADIER, Matthieu, 38200 VILLETTE DE VIENNE (FR)
(74) Representative: Lavoix

(56) References cited:
- CN-A- 112 238 831
- DE-A1- 102021 207 901
- US-A1- 2014 026 544
- US-A1- 2018 156 144

## Description

### TECHNICAL FIELD

The disclosure relates generally to combustion engine vehicles, also called ICE vehicles, where ICE stands for "internal combustion engine". In particular aspects, the disclosure relates to an electrical system for a combustion engine vehicle and to a vehicle comprising such an electrical system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Emissions of a combustion engine of a vehicle can be reduced by using an exhaust aftertreatment system through which the exhaust gas from the vehicle engine flows. In certain occasional circumstances, the exhaust gas need to be heated before entering the exhaust aftertreatment system. The vehicle is therefore provided with a heater dedicated to warm on demand the exhaust gas upstream the exhaust aftertreatment system. The heater, that may include an electric resistance, consumes significant levels of electrical power during some on-demand occasional periods, but is inactive at other times.

It is known from CN112238831A to use an electrical system of a vehicle comprising an principal electrical network including at least one electrical consumer, a battery connected to the electrical consumer, and an alternator, which is connected to the battery and the at least one electrical consumer. The electrical system also comprises a secondary electrical network including an auxiliary electrical load and a generator, which is connected to the auxiliary electrical load. The electrical system comprises a switch configured to connect the principal electrical network and the secondary electrical network so that the batteries are always connected to the generator, in parallel or in series. The voltage of the auxiliary electrical load is equal to the voltage of one of the battery when the batteries are in parallel and is equal to the addition of the voltages of the two batteries when the batteries are in series. The voltage cannot be regulated away from this two values.

Therefore, there is a need to provide and control a high amount of electrical power to supply occasionally the heater or, more generally, an auxiliary electrical load in a vehicle.

### SUMMARY

According to a first aspect of the disclosure, an electrical system for a combustion engine vehicle comprises:
- an on-board electrical network including:
   - at least one electrical consumer,
   - a battery connected through the on-board electrical network to the at least one electrical consumer, and
   - an alternator, which is configured to be mechanically coupled to an engine of the combustion engine vehicle so as to be driven by the engine to produce electricity, and which is connected through the on-board electrical network to the battery and the at least one electrical consumer,
- an auxiliary electrical network including:
   - an auxiliary electrical load, and
   - a generator, which is configured to be mechanically coupled to the engine so as to be driven by the engine to produce electricity, and which is connected through the auxiliary electrical network to the auxiliary electrical load, and
- a controllable switch, which connects therethrough the on-board electrical network and the auxiliary electrical network with each other when the controllable switch is closed, and which disconnects the on-board electrical network and the auxiliary electrical network from each other when the controllable switch is open.

The first aspect of the disclosure may seek to activate the generator from the on-board electrical network followed by the segregation of the on-board electrical network and the auxiliary electrical network, allowing then an independent control of the auxiliary electrical network. A technical benefit may include providing and controlling a high amount of electrical power to supply occasionally the auxiliary electrical load in a vehicle.

Optionally in some examples, including in at least one preferred example, the controllable switch is adapted, while the engine is running, to be successively (i) closed so that the battery and/or the alternator supply the auxiliary electrical load and activate the generator, then (ii) reopened so that the auxiliary electrical load is supplied only by the generator. A technical benefit may include that at the instant when the controllable switch reopens, no load dump occurs in the on-board electrical network and the load variation seen by the generator is marginal, thus limiting the risk of instability or blackout in the auxiliary electrical network.

The generator is adapted to be deactivated so that electrical supply of the auxiliary electrical load by the generator is gradually reduced until to be interrupted. A technical benefit may include that voltage in the auxiliary electrical network goes down until to zero without inducing mechanical resistance to the engine.

The generator features a regulated output voltage. A technical benefit may include improving the control of the amount of electrical power to supply the auxiliary electrical load.

The controllable switch has a first terminal, which connects the controllable switch to the on-board electrical network, and a second terminal, which connects the controllable switch to the auxiliary electrical network, and the regulated output voltage of the generator is controlled to raise the voltage of the second terminal at least to the voltage of the first terminal when the controllable switch is closed. A technical benefit may include that the current that is flowing through the closed switch is quite low and flows from the auxiliary electrical network to the on-board electrical network.

When the controllable switch is open, the regulated output voltage of the generator is controlled to regulate power with which the generator supplies the auxiliary electrical load. A technical benefit may include controlling power consumption of the auxiliary electrical load and thus adjusting action produced by the latter, in particular as a function of operating speed of the engine, of operating load of the engine, and so.

The electrical system further comprises an electronic control unit that is adapted to close and open the controllable switch. A technical benefit may include improving the practical implementation of the electrical system.

The electronic control unit is configured to (i) close the controllable switch when the auxiliary electrical load requires to be supplied, then (ii) reopen the controllable switch after a preset time. A technical benefit may include implementing a reliable and efficient solution.

The preset time is less than 1 second. A technical benefit may include implementing a practical layout.

The electronic control unit is configured to (i) close the controllable switch when the auxiliary electrical load requires to be supplied, then (ii) reopen the controllable switch when the electronic control unit receives a predefined operating signal. A technical benefit may include implementing a reliable and efficient solution.

The controllable switch is adapted, after being closed, to reopen automatically when a current through the controllable switch is below a predefined threshold, and the electronic control unit is configured to (i) close the controllable switch when the auxiliary electrical load requires to be supplied, then (ii) allow the controllable switch to reopen automatically. A technical benefit may include implementing a reliable and efficient solution.

The electrical system further comprises a diode, which is connected in series to the controllable switch and which is adapted, when the controllable switch is closed, to allow an electric current to pass from the on-board electrical network to the auxiliary electrical network and to block an electric current from the auxiliary electrical network to the on-board electrical network. A technical benefit may include preventing any voltage rise on the on-board electrical network in case the generator is capable to supply too high voltages that would cause damage especially to the at least one electrical consumer.

The auxiliary electrical load is a heater for heating an exhaust after treatment system. A technical benefit may include offering an efficient solution in connection with the operational issues of the above-mentioned exhaust aftertreatment system.

The generator is a 24-volt alternator. A technical benefit may include implementing a practical layout.

The generator is a 48-volt alternator. The generator is a 24-volt alternator. A technical benefit may include implementing a practical layout.

The generator is a 48-volt electric machine. The generator is a 24-volt alternator. A technical benefit may include implementing a practical layout.

The generator is a 12-volt alternator. The generator is a 24-volt alternator. A technical benefit may include implementing a practical layout.

The controllable switch is a solid-state switch. A technical benefit may include improving robustness and compactness.

The at least one electrical consumer includes lights of the combustion engine vehicle. A technical benefit may include implementing a practical layout.

According to a second aspect of the disclosure, a vehicle comprises a combustion engine and an electrical system as defined above, the combustion engine being mechanically coupled both to the alternator and the generator of the electrical system. A technical benefit may include offering an improved vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.

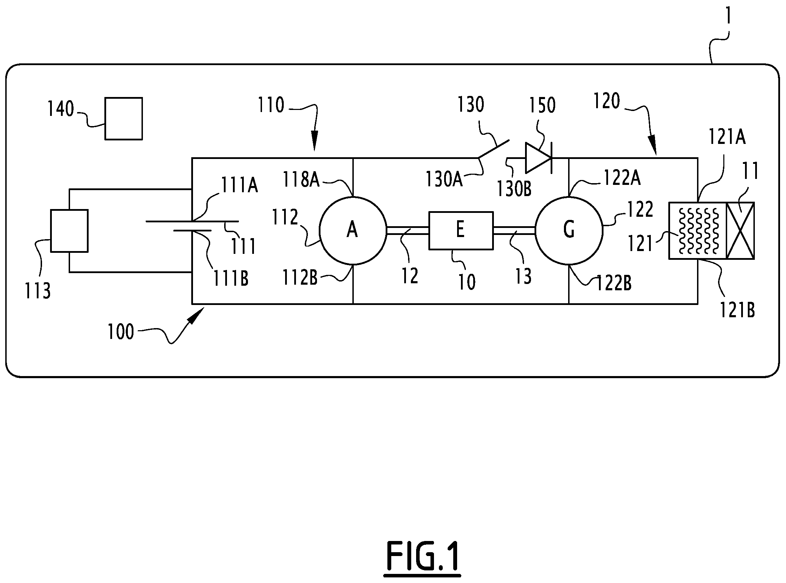

**FIG. 1** is a schematic representation of a vehicle.

The detailed description set forth below provides information and examples of the disclosed technology with sufficient detail to enable those skilled in the art to practice the disclosure.

A vehicle 1 is very schematically shown in figure 1. In the example considered here, the vehicle 1 may be a truck or a similar heavy-duty vehicle.

The vehicle 1 comprises an internal combustion engine 10 that is mechanically coupled to wheels of vehicle 1 to move the vehicle 1 on ground. When running, the engine 10 emits exhaust gas that are treated by an exhaust aftertreatment system 11 of the vehicle 1, usual called EATS. For example, the exhaust aftertreatment system 11 may reduce the nitrogen oxide content in the exhaust gas. In practice, the exhaust aftertreatment system 11 may include a catalyst, a particulate filter, a urea injection and so. The specificities of the exhaust aftertreatment system 11 are not limitative, bearing in mind that at least one or more of the components of the exhaust aftertreatment system 11 need to be occasionally heat-up to get faster to operative condition or to maintain operative condition. This reduces the light-off of Selective Catalyst Reduction, maintains regeneration in low engine load or any other thermal dependent mode of the exhaust aftertreatment system 11.

The vehicle 1 further comprises an electrical system 100 for providing and controlling electricity on board of the vehicle 1.

The electrical system 100 includes an on-board electrical network 110 including a battery 111 and an alternator 112, which are connected in parallel with each other through the on-board electrical network 110.

The battery 111 supplies a current, typically a direct current, between a first terminal 111A and a second terminal 111B of the battery 111. For example, the battery 111 may feature a nominal voltage of 24 volts when the on-board electrical network 110 is a so-called 24-volt network.

The alternator 112 has a first terminal 112A and a second terminal 112B, which are respectively connected to the first terminal 111A and second terminal 112B of the battery 111 through the on-board electrical network 110. The alternator 112 is able to generate electricity, or electrical power, from mechanical energy provided by the engine 10. For this purpose, the alternator 112 is mechanically coupled to the engine 10, for example via a belt that is driven by a shaft 12 of the engine 10. Other mechanical couplings between the engine 10 and the alternator 112 are feasible. In any case, when the engine 10 is running, the alternator 112 is driven by the engine 10 to produce electricity between its terminals 112A and 112B.

In practice, in order to put the alternator 112 in an operating state in which the alternator 112 generates electricity, the alternator 112 requires to be electrically activated. To this end, the alternator 112 is able to be activated by the battery 111, by means of an appropriate electrical supply of the alternator 112 by the battery 111. Once the alternator 112 is in the above-mentioned operating state, the alternator 112 is able to provide electrical power typically to charge the battery 111 and/or supply one or more electrical consumers 113 of the on-board electrical network 110.

For example, when the on-board electrical network 110 is a 24-volt network, the alternator 112 is a 24-volt alternator, which means that the alternator 112 is able to produce a current having a voltage that is appropriate to adequately supply the on-board electrical network 110, in particular to charge the battery 111 and/or supply the electrical consumers 113.

As schematically shown on figure 1, the electrical consumers 113 are each connected through the on-board electrical network 110 to the battery 110 and the alternator 112 so as to be supplied by the battery 111 and/or the alternator 112. The electrical consumers 113 include, amongst others, lights of the vehicle 1 and various other electrical equipment, such as displays, a horn, window regulators, ...

In addition to the on-board electrical network 110 that is usual and well known in the art, the electrical system 100 includes an auxiliary electrical network 120 that includes both an auxiliary electrical load 121, which is distinct from the electrical consumers 113, and a generator 122, which is distinct from the battery 111 and from the alternator 112.

The auxiliary electrical load 121 may be a heater for heating the exhaust aftertreatment system 11 and may thus include a resistance that produces heat when the heater is supplied with electricity. In practice, the heater operates during on-demand occasional periods, in which the heater warms the exhaust gas entering the exhaust aftertreatment system 11 sufficiently to regenerate the latter. In these occasional periods, the heater therefore needs to be supplied with an electric power that is substantial, in the sense that the sum of this electric power and the power consumed by the electrical consumers 13 may reach a value that is difficult to sustain for the battery 111 and/or the alternator 112. Outside the above-mentioned occasional periods, the heater is inactive, in the sense that the heater does not need to be electrically powered.

Of course, rather than the above-mentioned heater, the auxiliary electrical load 121 may be any electrical equipment, especially requiring to be supplied with a substantial electric power during some occasional periods but be inactive at other times.

The generator 122 is connected in parallel to the auxiliary electrical load 121 through the auxiliary electrical network 120 and is thus able to supply the auxiliary electrical load 121. The generator 122 has a first terminal 122A and a second terminal 122B, which are respectively connected to a first terminal 121A and a second terminal 122A of the auxiliary electrical load 121.

The generator 122 is able to generate electricity from mechanical energy provided by the engine 10. For this purpose, the generator 122 is mechanically coupled to the engine 10, for example via a belt that is driven by a shaft 13 of the engine 10. The shaft 13 may be the shaft 12 or another shaft of the engine 10. Other mechanical couplings between the engine 10 and the generator 122 are feasible. In any case, when the engine 10 is running and after the generator 122 be electrically activated, the generator 122 is driven by the engine 10 to produce electricity between its terminals 122A and 122B.

For example, the generator 122 may be a 24-volt alternator, which means that the generator 122 is able to produce a current having a voltage, which is between 22 and 32 volts and which is appropriate to adequately supply the auxiliary electrical network 120 that is thus a so-called 24-volt network. In practice, the voltage across such a 24-volt alternator is defined by a target value that is either a default value, for example 28.3 volts, or a controllable value transmitted to the alternator.

According to another example, the generator 122 may be a 48-volt alternator or a 48-volt electric machine, which means in both cases that the generator 122 is able to produce current having a voltage, which is between 22 and 54 volts and which is appropriate to adequately supply the auxiliary electrical network 120 that is thus a so-called 48-volt network. In practice, the voltage across such a 24-volt alternator is defined by a target value that is either a default value or a controllable value transmitted to the alternator.

In any case, the generator 122 may advantageously feature a regulated output voltage. The benefits of this provision will be seen below.

As shown in figure 1, the electrical system 100 further comprises a controllable switch 130 arranged to controllably connect/disconnect the on-board electrical network 110 with/from the auxiliary electrical network 120. The switch 130 has a first terminal 130A, which connects the switch 130 to the on-board electrical network 110, and a second terminal 130B, which connects the switch 130 to the auxiliary electrical network 120.

For practical reasons, including robustness and compactness, the switch 130 may be a solid-state switch.

When the switch 130 is closed, in other words when the switch 130 is in a closed state, the terminals 130A and 130B of the switch 130 are directly connected to each other through the switch 130, so the switch 130 connects therethrough the electrical network 110 and the auxiliary electrical network 120 with each other.

When the switch 130 is open, in other words when the switch 130 is in an open state, the terminals 130A and 130B of the switch 130 are separated from each other by the switch 130, so the switch 130 disconnects the on-board electrical network 110 and the auxiliary electrical network 120 from each other.

The switch 130 is thus advantageously usable, while the engine 10 is running, to be successively:
- closed so that the battery 111 and/or the alternator 112 provide a current, which flows through the switch 130 from the on-board electrical network 110 to the auxiliary electrical network 120, and which supplies the auxiliary electrical load 121 and activates the generator 122, then
- reopened so that any current provided by the battery 111 or the alternator 112 in the on-board electrical network 110 does not flow to the auxiliary electrical network 120, so that the auxiliary electrical network 120 is independent from the on-board electrical network 110 and the auxiliary electrical load 121 is thus supplied only by the generator 122.

The time during which the switch 130 is closed, i.e. from the instant, when the switch 130 changes from its open to its closed state, can therefore be considered as consisting of two successive phases, namely an activation phase and a stabilization phase.

Indeed, in the activation phase, the generator 122 is activated by the battery 111 and/or the alternator 112, by means of an appropriate electrical supply of the generator 122 by a current, which comes from the battery 111 and/or the alternator 112 and which flows through the switch 130 from the on-board electrical network 110 to the auxiliary electrical network 120. At the end of this activation phase that may last around 300 ms ± 200 ms for example, the generator 122 has reached the above-mentioned operating state and therefore generates "usable" electricity at its terminals 122A and 122B, so that begins the stabilization phase that may last around 300 ms ± 200 ms for example. Thus, in the activation phase, the auxiliary electrical load 121 is supplied only by the battery 111 and/or the alternator 112, whereas in the stabilization phase, the auxiliary electrical load 121 is supplied both by the battery 111 and/or the alternator 112 and by the generator 122.

In the stabilization phase, the regulated output voltage of the generator 122 may advantageously be controlled to raise the voltage of the terminal 130B of the switch 130 at least to, or even slightly above, the voltage of the terminal 130A of the switch 130. In this way, the generator 122 thus provides all the current consumed by the auxiliary electrical load 121 and potentially a small surplus. This also implies that the current that is then flowing through the closed switch 130 is quite low, typically less than 30 or 20 amperes or almost zero, and flows from the auxiliary electrical network 120 to the on-board electrical network 110.

At the end of the stabilization phase, i.e. at the instant when the switch 130 changes from its closed to its open state, no load dump occurs in the on-board electrical network 110 since the current at the switch 130 is low and potentially flows from the auxiliary electrical network 120 to the on-board electrical network 110. Moreover, the load variation seen by the generator 122 is marginal, thus limiting the risk of instability or blackout in the auxiliary electrical network 120. Load dump in the auxiliary electrical network 120 may advantageously be reduced by putting the switch 130 near to the generator 122 to limit the length of the conductor from the switch 130 to the generator 122.

Just after the stabilization phase, the generator 122 continues to supply the auxiliary electrical load 121 as long as necessary, which corresponds to a new phase that can be considered as an autonomous operation phase for the generator 122. For example, this autonomous operation phase may last several minutes. In this autonomous operation phase, the regulated output voltage of the generator 122 may advantageously be controlled to regulate power with which the generator 122 supplies the auxiliary electrical load 121. In other words, the auxiliary electrical load 121 is thus voltage-controlled thanks to the generator 122, which makes possible to control power consumption of the auxiliary electrical load 121 and thus to adjust action produced by the latter, for example heating supplied by the above mentioned heater, in particular as a function of operating speed of the engine 10, of operating load of the engine 10, and so.

The autonomous operation phase ends when the auxiliary electrical load 121 does not require any more to be supplied. At this instant, a final phase takes place, at the initial instant of which the generator may advantageously be deactivated, i.e. be not anymore electrically activated but still being mechanically driven. During this final phase, electrical supply of the auxiliary electrical load 121 by the generator 122 may therefore be gradually reduced until to be interrupted. In this way, voltage in the auxiliary electrical network 120 goes down until to zero without inducing mechanical resistance to the engine 10.

In practice, the electrical system 100 may comprise an electronic control unit 140 that is able to close and open the switch 130. This electronic control unit 140 may be integrated into an on-board computer of the vehicle 1 and/or may be able to control also the alternator 112, the generator 122, and so.

The electronic control unit 140 may be configured to close the switch 130 when the auxiliary electrical load 121 requires to be supplied, for example at each time the electronic control unit 140 receives a corresponding signal from the on-board computer, especially in relation to the operation needs of the exhaust aftertreatment system 11.

The electronic control unit 140 may also be configured to subsequently reopen the switch 130 either after a preset time, that is for example less than 1 second ± 0.1 second, or when the electronic control unit 140 receives a predefined operating signal, for example coming from the generator 122, from electrical measurements, and so.

Alternatively, the electronic control unit 140 may be configured to allow the switch 130 to reopen automatically provided that the switch 130 is adapted, after being closed, to reopen automatically when a current through the switch 130 is below a predefined threshold. This makes possible to disconnect the on-board electrical network 110 and the auxiliary electrical network 120 from each other without any brutal or instantaneous or uncontrolled load variation.

According to an optional provision that is shown in figure 1, the electrical system 100 may further comprise a diode 150 that is connected in series to the switch 130. In the example of figure 1, the diode 150 is connected at the terminal 130B of the switch 130, but connecting the diode 150 at the terminal 130A is also feasible. This diode 150 is adapted, when the switch is closed, to allow an electric current to pass from the on-board electrical network 110 to the auxiliary electrical network 120 and to block an electric current from the auxiliary electrical network 120 to the on-board electrical network 110. Thus, the diode 150 blocks any current through the closed switch 130 in the above-mentioned activation and stabilization phases. In this way, the diode 150 prevent any voltage rise on the on-board electrical network 110 in case the generator 122 is capable to supply too high voltages that would cause damage especially to electrical consumers 113. Furthermore, at the end of the stabilization phase, the switch 130 reopens with zero current therethrough. In practice, the diode 150 may be a discrete diode or part of a mosfet.

In a variant, the on-board electrical network 110 may be a 12-volt network, the battery 111 having a nominal voltage of 12 volts and the alternator 112 being a 12-volt alternator. Similarly, the auxiliary electrical network 120 may be a 12-volt network, the generator 122 being a 12-volt alternator for example.

Example 1: An electrical system for a combustion engine vehicle comprises:
- an on-board electrical network including:
   - at least one electrical consumer,
   - a battery connected through the on-board electrical network to the at least one electrical consumer, and
   - an alternator, which is mechanically coupled to an engine of the combustion engine vehicle so as to be driven by the engine to produce electricity, and which is connected through the on-board electrical network to the battery and the at least one electrical consumer,
- an auxiliary electrical network including:
   - an auxiliary electrical load, and
   - a generator, which is mechanically coupled to the engine so as to be driven by the engine to produce electricity, and which is connected through the auxiliary electrical network to the auxiliary electrical load, and
- a controllable switch, which connects therethrough the on-board electrical network and the auxiliary electrical network with each other when the controllable switch is closed, and which disconnects the on-board electrical network and the auxiliary electrical network from each other when the controllable switch is open.

Example 2: The system of example 1, wherein the controllable switch is adapted, while the engine is running, to be successively (i) closed so that the battery and/or the alternator supply the auxiliary electrical load and activate the generator, then (ii) reopened so that the auxiliary electrical load is supplied only by the generator.

Example 3: The system of example 2, wherein the generator is adapted to be deactivated so that electrical supply of the auxiliary electrical load by the generator is gradually reduced until to be interrupted.

Example 4: The system of any of examples 1-3, wherein the generator features a regulated output voltage.

Example 5: The system of example 4, wherein the controllable switch has a first terminal, which connects the controllable switch to the on-board electrical network, and a second terminal, which connects the controllable switch to the auxiliary electrical network, and wherein the regulated output voltage of the generator is controlled to raise the voltage of the second terminal at least to the voltage of the first terminal when the controllable switch is closed.

Example 6: The system of any of examples 4-5, wherein when the controllable switch is open, the regulated output voltage of the generator is controlled to regulate power with which the generator supplies the auxiliary electrical load.

Example 7: The system of any of examples 1-6, wherein the electrical system further comprises an electronic control unit that is adapted to close and open the controllable switch.

Example 8: The system of example 7, wherein the electronic control unit is configured to (i) close the controllable switch when the auxiliary electrical load requires to be supplied, then (ii) reopen the controllable switch after a preset time.

Example 9: The system of example 8, wherein the preset time is less than 1 second.

Example 10: The system of example 7, wherein the electronic control unit is configured to (i) close the controllable switch when the auxiliary electrical load requires to be supplied, then (ii) reopen the controllable switch when the electronic control unit receives a predefined operating signal.

Example 11: The system of example 7, wherein the controllable switch is adapted, after being closed, to reopen automatically when a current through the controllable switch is below a predefined threshold, and wherein the electronic control unit is configured to (i) close the controllable switch when the auxiliary electrical load requires to be supplied, then (ii) allow the controllable switch to reopen automatically.

Example 12: The system of any of examples 1-11, wherein the electrical system further comprises a diode, which is connected in series to the controllable switch and which is adapted, when the controllable switch is closed, to allow an electric current to pass from the on-board electrical network to the auxiliary electrical network and to block an electric current from the auxiliary electrical network to the on-board electrical network.

Example 13: The system of any of examples 1-12, wherein the auxiliary electrical load is a heater for heating an exhaust after treatment system.

Example 14: The system of any of examples 1-13, wherein the generator is a 24-volt alternator.

Example 15: The system of any of examples 1-13, wherein the generator is a 48-volt alternator.

Example 16: The system of any of examples 1-13, wherein the generator is a 48-volt electric machine.

Example 17: The system of any of examples 1-13, wherein the generator is a 12-volt alternator.

Example 18: The system of any of examples 1-17, wherein the controllable switch is a solid-state switch.

Example 19: The system of any of examples 1-18, wherein the at least one electrical consumer includes lights of the combustion engine vehicle.

Example 20: A vehicle comprises a combustion engine and an electrical system of any examples 1-19, the combustion engine being mechanically coupled both to the alternator and the generator of the electrical system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electrical system (100) for a combustion engine vehicle (1), comprising:
- an on-board electrical network (110) including:
- at least one electrical consumer (113),
- a battery (111) connected through the on-board electrical network (110) to the at least one electrical consumer (113), and
- an alternator (112), which is configured to be mechanically coupled to an engine (10) of the combustion engine vehicle (1) so as to be driven by the engine to produce electricity, and which is connected through the on-board electrical network (110) to the battery (111) and the at least one electrical consumer (113),
- an auxiliary electrical network (120) including:
- an auxiliary electrical load (121), and
- a generator (122), which is configured to be mechanically coupled to the engine (10) so as to be driven by the engine to produce electricity, and which is connected through the auxiliary electrical network (120) to the auxiliary electrical load (121), and
- a controllable switch (130), which connects therethrough the on-board electrical network (110) and the auxiliary electrical network (120) with each other when the controllable switch (130) is closed, and which disconnects the on-board electrical network (110) and the auxiliary electrical network (120) from each other when the controllable switch (130) is open.

2. The electrical system of claim 1, wherein the controllable switch (130) is adapted, while the engine is running, to be successively:
- closed so that the battery (111) and/or the alternator (112) supply the auxiliary electrical load (121) and activate the generator (122), then
- reopened so that the auxiliary electrical load (121) is supplied only by the generator (122).

3. The electrical system of claim 2, wherein the generator (122) is adapted to be deactivated so that electrical supply of the auxiliary electrical load (121) by the generator is gradually reduced until to be interrupted.

4. The electrical system of any of claims 1-3, wherein the generator (122) features a regulated output voltage.

5. The electrical system of claim 4, wherein the controllable switch (130) has a first terminal (130A), which connects the controllable switch (130) to the on-board electrical network (110), and a second terminal (130B), which connects the controllable switch (130) to the auxiliary electrical network (120), and wherein the regulated output voltage of the generator (122) is controlled to raise the voltage of the second terminal (130B) at least to the voltage of the first terminal (130A) when the controllable switch (130) is closed.

6. The electrical system of any of claims 4-5, wherein when the controllable switch (130) is open, the regulated output voltage of the generator (122) is controlled to regulate power with which the generator supplies the auxiliary electrical load (121).

7. The electrical system of any of claims 1-6, further comprising an electronic control unit (140) that is adapted to close and open the controllable switch (130).

8. The electrical system of claim 7, wherein the electronic control unit (140) is configured to:
- close the controllable switch (130) when the auxiliary electrical load (121) requires to be supplied, then
- reopen the controllable switch (130) after a preset time.

9. The electrical system of claim 7, wherein the controllable switch (130) is adapted, after being closed, to reopen automatically when a current through the controllable switch (130) is below a predefined threshold, and wherein the electronic control unit (140) is configured to:
- close the controllable switch (130) when the auxiliary electrical load (121) requires to be supplied, then
- allow the controllable switch (130) to reopen automatically.

10. The electrical system of any of claims 1-9, further comprising a diode (150), which is connected in series to the controllable switch (130) and which is adapted, when the controllable switch (130) is closed, to allow an electric current to pass from the on-board electrical network (110) to the auxiliary electrical network (120) and to block an electric current from the auxiliary electrical network (120) to the on-board electrical network (110).

11. The electrical system of any of claims 1-10, wherein the auxiliary electrical load (121) is a heater for heating an exhaust after treatment system (11).

12. The electrical system of any of claims 1-11, wherein the generator (122) is a 24-volt alternator.

13. The electrical system of any of claims 1-11, wherein the generator (122) is a 48-volt alternator.

14. The electrical system of any of claims 1-11, wherein the generator (122) is a 48-volt electric machine.

15. A vehicle (1), comprising:
- a combustion engine (10), and
- an electrical system (100) according to any of claims 1-14,
and wherein the combustion engine (10) is mechanically coupled both to the alternator (112) and the generator (122) of the electrical system (100).

## Patentansprüche

1. Elektrisches System (100) für ein Fahrzeug (1) mit Verbrennungsmotor, umfassend:
- ein Bordstromnetz (110), das einschließt:
- mindestens einen elektrischen Verbraucher (113),
- eine Batterie (111), die über das Bordstromnetz (110) mit dem mindestens einen elektrischen Verbraucher (113) verbunden ist, und
- einen Alternator (112), der dazu konfiguriert ist, mechanisch mit einem Motor (10) des Fahrzeugs (1) mit Verbrennungsmotor gekoppelt zu sein, um von dem Motor zur Erzeugung von Elektrizität angetrieben zu werden, und der über das Bordstromnetz (110) mit der Batterie (111) und dem mindestens einen elektrischen Verbraucher (113) verbunden ist,
- ein Hilfsstromnetz (120), aufweisend:
- eine elektrische Hilfslast (121), und
- einen Generator (122), der dazu konfiguriert ist, mechanisch mit dem Motor (10) gekoppelt zu sein, um von dem Motor zur Erzeugung von Elektrizität angetrieben zu werden, und der über das Hilfsstromnetz (120) mit der elektrischen Hilfslast (121) verbunden ist, und
- einen steuerbaren Schalter (130), der, wenn der steuerbare Schalter (130) geschlossen ist, durch sich hindurch das Bordstromnetz (110) und das Hilfsstromnetz (120) miteinander verbindet und der, wenn der steuerbare Schalter (130) offen ist, das Bordstromnetz (110) und das Hilfsstromnetz (120) voneinander trennt.

2. Elektrisches System nach Anspruch 1, wobei der steuerbare Schalter (130), während der Motor läuft, dazu angepasst ist, nacheinander:
- geschlossen zu werden, sodass die Batterie (111) und/oder der Alternator (112) die elektrische Hilfslast (121) versorgen und den Generator (122) aktivieren, und dann
- wieder geöffnet zu werden, sodass die elektrische Hilfslast (121) nur durch den Generator (122) versorgt wird.

3. Elektrisches System nach Anspruch 2, wobei der Generator (122) dazu angepasst ist, deaktiviert zu werden, sodass die elektrische Versorgung der elektrischen Hilfslast (121) durch den Generator allmählich reduziert wird, bis sie unterbrochen wird.

4. Elektrisches System nach einem der Ansprüche 1-3, wobei der Generator (122) eine geregelte Ausgangsspannung aufweist.

5. Elektrisches System nach Anspruch 4, wobei der steuerbare Schalter (130) einen ersten Anschluss (130A), der den steuerbaren Schalter (130) mit dem Bordstromnetz (110) verbindet, und einen zweiten Anschluss (130B) aufweist, der den steuerbaren Schalter (130) mit dem Hilfsstromnetz (120) verbindet, und wobei die geregelte Ausgangsspannung des Generators (122) gesteuert wird, um die Spannung des zweiten Anschlusses (130B) mindestens auf die Spannung des ersten Anschlusses (130A) anzuheben, wenn der steuerbare Schalter (130) geschlossen ist.

6. Elektrisches System nach einem der Ansprüche 4-5, wobei, wenn der steuerbare Schalter (130) offen ist, die geregelte Ausgangsspannung des Generators (122) gesteuert wird, um die Leistung zu regeln, mit der der Generator die elektrische Hilfslast (121) versorgt.

7. Elektrisches System nach einem der Ansprüche 1-6, ferner umfassend eine elektronische Steuereinheit (140), die dazu angepasst ist, den steuerbaren Schalter (130) zu schließen und zu öffnen.

8. Elektrisches System nach Anspruch 7, wobei die elektronische Steuereinheit (140) dazu konfiguriert ist:
- den steuerbaren Schalter (130) zu schließen, wenn die elektrische Hilfslast (121) versorgt werden muss, und dann
- den steuerbaren Schalter (130) nach einer voreingestellten Zeit wieder zu öffnen.

9. Elektrisches System nach Anspruch 7, wobei der steuerbare Schalter (130) dazu angepasst ist, nach dem Schließen automatisch wieder zu öffnen, wenn ein Strom durch den steuerbaren Schalter (130) unterhalb eines vordefinierten Schwellenwerts liegt, und wobei die elektronische Steuereinheit (140) dazu konfiguriert ist:
- den steuerbaren Schalter (130) zu schließen, wenn die elektrische Hilfslast (121) versorgt werden muss, und dann
- zuzulassen, dass der steuerbare Schalter (130) automatisch wieder öffnet.

10. Elektrisches System nach einem der Ansprüche 1-9, ferner umfassend eine Diode (150), die in Reihe mit dem steuerbaren Schalter (130) geschaltet ist und die dazu angepasst ist, wenn der
steuerbare Schalter (130) geschlossen ist, einen elektrischen Strom vom Bordstromnetz (110) zum Hilfsstromnetz (120) durchzulassen und einen elektrischen Strom vom Hilfsstromnetz (120) zum Bordstromnetz (110) zu sperren.

11. Elektrisches System nach einem der Ansprüche 1-10, wobei die elektrische Hilfslast (121) eine Heizeinrichtung zum Erwärmen eines Abgasnachbehandlungssystems (11) ist.

12. Elektrisches System nach einem der Ansprüche 1-11, wobei der Generator (122) ein 24-Volt-Wechselstromgenerator ist.

13. Elektrisches System nach einem der Ansprüche 1-11, wobei der Generator (122) ein 48-Volt-Wechselstromgenerator ist.

14. Elektrisches System nach einem der Ansprüche 1-11, wobei der Generator (122) eine 48-Volt-Elektromaschine ist.

15. Fahrzeug (1), umfassend:
- einen Verbrennungsmotor (10), und
- ein elektrisches System (100) nach einem der Ansprüche 1-14,
und wobei der Verbrennungsmotor (10) mechanisch sowohl mit dem Wechselstromgenerator (112) als auch mit dem Generator (122) des elektrischen Systems (100) gekoppelt ist.

## Revendications

1. Système électrique (100) pour un véhicule à moteur à combustion (1), comprenant:
- un réseau électrique embarqué (110) incluant :
- au moins un consommateur électrique (113),
- une batterie (111) connectée, par l'intermédiaire du réseau électrique embarqué (110), audit au moins un consommateur électrique (113), et
- un alternateur (112), qui est configuré pour être mécaniquement couplé à un moteur (10) du véhicule à moteur à combustion (1) afin d'être entraîné par le moteur pour produire de l'électricité, et qui est connecté, par l'intermédiaire du réseau électrique embarqué (110), à la batterie (111) et audit au moins un consommateur électrique (113),
- un réseau électrique auxiliaire (120) incluant :
- une charge électrique auxiliaire (121), et
- un générateur (122), qui est configuré pour être mécaniquement couplé au moteur (10) afin d'être entraîné par le moteur pour produire de l'électricité, et qui est connecté, par l'intermédiaire du réseau électrique auxiliaire (120), à la charge électrique auxiliaire (121), et
- un interrupteur commandable (130), qui connecte à travers lui le réseau électrique embarqué (110) et le réseau électrique auxiliaire (120) l'un à l'autre lorsque l'interrupteur commandable (130) est fermé, et qui déconnecte le réseau électrique embarqué (110) et le réseau électrique auxiliaire (120) l'un de l'autre lorsque l'interrupteur commandable (130) est ouvert.

2. Système électrique selon la revendication 1, dans lequel l'interrupteur commandable (130) est adapté, pendant que le moteur fonctionne, pour être successivement:
- fermé de sorte que la batterie (111) et/ou l'alternateur (112) alimentent la charge électrique auxiliaire (121) et activent le générateur (122), puis
- rouvert de sorte que la charge électrique auxiliaire (121) soit alimentée uniquement par le générateur (122).

3. Système électrique selon la revendication 2, dans lequel le générateur (122) est adapté pour être désactivé de sorte que l'alimentation électrique de la charge électrique auxiliaire (121) par le générateur soit progressivement réduite jusqu'à être interrompue.

4. Système électrique selon l'une quelconque des revendications 1 à 3, dans lequel le générateur (122) présente une tension de sortie régulée.

5. Système électrique selon la revendication 4, dans lequel l'interrupteur commandable (130) comporte une première borne (130A), qui connecte l'interrupteur commandable (130) au réseau électrique embarqué (110), et une seconde borne (130B), qui connecte l'interrupteur commandable (130) au réseau électrique auxiliaire (120), et dans lequel la tension de sortie régulée du générateur (122) est commandée pour élever la tension de la seconde borne (130B) au moins jusqu'à la tension de la première borne (130A) lorsque l'interrupteur commandable (130) est fermé.

6. Système électrique selon l'une quelconque des revendications 4 à 5, dans lequel, lorsque l'interrupteur commandable (130) est ouvert, la tension de sortie régulée du générateur (122) est commandée pour réguler la puissance avec laquelle le générateur alimente la charge électrique auxiliaire (121).

7. Système électrique selon l'une quelconque des revendications 1 à 6, comprenant en outre une unité de commande électronique (140) qui est adaptée pour fermer et ouvrir l'interrupteur commandable (130).

8. Système électrique selon la revendication 7, dans lequel l'unité de commande électronique (140) est configurée pour :
- fermer l'interrupteur commandable (130) lorsque la charge électrique auxiliaire (121) doit être alimentée, puis
- rouvrir l'interrupteur commandable (130) après un temps prédéfini.

9. Système électrique selon la revendication 7, dans lequel l'interrupteur commandable (130) est adapté, après avoir été fermé, pour se rouvrir automatiquement lorsqu'un courant traversant l'interrupteur commandable (130) est inférieur à un seuil prédéfini, et dans lequel l'unité de commande électronique (140) est configurée pour :
- fermer l'interrupteur commandable (130) lorsque la charge électrique auxiliaire (121) doit être alimentée, puis
- permettre à l'interrupteur commandable (130) de se rouvrir automatiquement.

10. Système électrique selon l'une quelconque des revendications 1 à 9, comprenant en outre une diode (150), qui est connectée en série à l'interrupteur commandable (130) et qui est adaptée, lorsque l'interrupteur commandable (130) est fermé, pour permettre à un courant électrique de passer du réseau électrique embarqué (110) vers le réseau électrique auxiliaire (120) et pour bloquer un courant électrique du réseau électrique auxiliaire (120) vers le réseau électrique embarqué (110).

11. Système électrique selon l'une quelconque des revendications 1 à 10, dans lequel la charge électrique auxiliaire (121) est un dispositif de chauffage destiné à chauffer un système de post-traitement des gaz d'échappement (11).

12. Système électrique selon l'une quelconque des revendications 1 à 11, dans lequel le générateur (122) est un alternateur de 24 volts.

13. Système électrique selon l'une quelconque des revendications 1 à 11, dans lequel le générateur (122) est un alternateur de 48 volts.

14. Système électrique selon l'une quelconque des revendications 1 à 11, dans lequel le générateur (122) est une machine électrique de 48 volts.

15. Véhicule (1), comprenant :
- un moteur à combustion (10), et
- un système électrique (100) selon l'une quelconque des revendications 1 à 14,
et dans lequel le moteur à combustion (10) est mécaniquement couplé à la fois à l'alternateur (112) et au générateur (122) du système électrique (100).
